# EUROPÄISCHE PATENTSCHRIFT

(11) **EP 3 416 786 B1**
(45) Veröffentlichungstag und Bekanntmachung des Hinweises auf die Patenterteilung: **24.03.2021**
(21) Anmeldenummer: 17721632.2
(22) Anmeldetag: 03.05.2017
(51) Int. Cl.: B25J 11/00, B25J 15/00, B65B 35/36, B65B 35/50

(54) **GREIFER**
GRIPPER
DISPOSITIF DE PRÉHENSION

(43) Veröffentlichungstag der Anmeldung: 26.12.2018
(73) Patentinhaber: MULTIVAC Sepp Haggenmüller SE & Co. KG, 87787 Wolfertschwenden (DE)
(72) Erfinder: GRUBER, Stefan, 3174 Revetal (NO)
(74) Vertreter: Grünecker Patent- und Rechtsanwälte PartG mbB
(86) Internationale Anmeldenummer: PCT/EP2017/060491
(87) Internationale Veröffentlichungsnummer: WO 2018/202286

(56) Entgegenhaltungen:
- EP-A1- 2 439 026
- DE-A1-102015 113 220
- DE-T2- 69 306 083
- JP-A- 2002 103 268

## Beschreibung

Die Erfindung bezieht sich auf einen Greifer mit den Merkmalen des Anspruchs 1 sowie auf ein Verfahren gemäß Anspruch 9.

Aus der EP 1685045 B1 ist ein Aufnahmegreifer zum Aufnehmen von Lebensmitteln offenbart. Dabei umfasst der Aufnahmegreifer zwei relativ zueinander bewegbare Aufnahmesicheln in Form von Platten. Der Greifer ist an einen Deltaroboter angeordnet und ist zur Aufnahme von Produkten von einem Transportband und anschließend zum Ablegen bzw. Abwerfen der Produkte in einen Behälter bestimmt.

Aus der DE 102009016333 A1 ist ebenfalls ein Aufnahmegreifer bekannt, der zwei zueinander bewegbare Aufnahmeplatten umfasst.

Um überlappende Produkte oder Produktportionen in einer Verpackung zu bilden, nimmt der Greifer die Produktportion von einem Zuführband ab und legt die Produkte, die für eine gemeinsame Portion vorgesehen sind, nacheinander und versetzt in einen Behälter, um eine Überlappung der Portionen bzw. Produkte zu erzeugen.

Alternativ ist bekannt, dass bereits auf dem Zuführband überlappende Produkte als Portion vom Greifer aufgenommen werden und anschließend gemeinsam in den Behälter abgelegt werden. Das Überlappen von zwei Produkten oder Portionen im Bereich vor dem Zuführband ist aufwendig und fordert einen erhöhten Platzbedarf.

Die EP 2 439 026 A1 offenbart einen Portionsgreifer, der zwei relativ zueinander bewegbare Aufnahmeplatten aufweist, wobei jede zur Aufnahme von entsprechend geformten und dimensionierten Produktportionen geeignet ist und jeweils einen bewegbaren Anschlag aufweist, wobei die beiden Anschläge relativ zueinander bewegbar sind.

Die DE 10 2015 113 220 A1 offenbart einen Produktgreifer mit einem Niederhalter.

Aufgabe der vorliegenden Erfindung ist es, einen alternativen Greifer zur Verfügung zu stellen, um überlappende Produkte in einem Behälter zu erzeugen.

Diese Aufgabe wird gelöst durch einen Greifer gemäß dem Anspruch 1 sowie durch ein Verfahren mit den Merkmalen des Anspruchs 9. Vorteilhafte Weiterbildungen der Erfindung sind in den Unteransprüchen angegeben.

Der erfindungsgemäße Greifer umfasst eine erste Aufnahmeplatte zur Aufnahme einer ersten Produktportion und eine zweite Aufnahmeplatte zur Aufnahme einer zweiten Produktportion, wobei die Aufnahmeplatten relativ zueinander bewegbar sind. Des Weiteren umfasst der Greifer einen ersten bewegbaren Anschlag, der der ersten Aufnahmeplatte zugeordnet und relativ zu dieser bewegbar ist, und einen zweiten bewegbaren Anschlag, der der zweiten Aufnahmeplatte zugeordnet und relativ zu dieser bewegbar ist. Der und zweite Anschlag sind derart relativ zueinander bewegbar, um bei geschlossenem Greifer die Produktportionen zueinander zu bewegen, damit sich anschließend die Produktportionen überlappen. Dies ermöglicht es, das Überlappen der Produktportionen nur mittels des Greifers auszuführen, und dieser Vorgang kann während der Bewegung des Greifers vom Zuführband zum Behälter erfolgen, so dass die Maschinen- bzw. Linienleistung einer Verpackungsanlage erhöht wird oder bei einer Pickerstrasse mit mehreren Pickern aufgrund der Erhöhung der Einzelleistung aller Picker der Pickerstrasse ein Picker entfallen kann und somit die Kosten reduziert werden können. Unter die Bezeichnung Picker fallen nicht nur Deltaroboter sondern auch Zweiachsroboter, an denen ein solcher Greifer angeodnet ist.

Zudem ist erfindungsgemäß eine erste Aufnahmeebene der ersten Aufnahmeplatte orthogonal zur Bewegungsrichtung der Aufnahmeplatten höher als eine zweite Aufnahmeebene der zweiten Aufnahmeplatte, um die erste Produktportion auf einfache Weise über die zweite Produktportion verlagern zu können und somit eine Überlappung zu erzeugen.

In einer besonders vorteilhaften Ausführung weist die erste Aufnahmeplatte eine größere Ausbildung in der Höhe auf als die zweite Aufnahmeplatte, um die erste Produktportion auf einfache Weise über die zweite Produktportion verlagern zu können und somit eine Überlappung zu erzeugen.

Bevorzugt weist der Greifer einen ersten Produktniederhalter und/oder einen zweiten Produktniederhalter auf, um die Produktportionen bei hohen Beschleunigungen sicher auf der Aufnahmeplatte zu halten. Dabei ist vorzugsweise der Produktniederhalter orthogonal zur Aufnahmeebene bewegbar.

Der erste Anschlag und der zweite Anschlag weisen vorzugsweise jeweils einen Antrieb auf, um sowohl die erste Produktportion als auch die zweite Produktportion zueinander zeitgleich oder nacheinander bewegen und damit überlagern zu können. Dabei ist der jeweilige Antrieb bevorzugt ein Servomotor oder ein Schrittmotor oder ein pneumatischer Antrieb. Dies bringt die Vorteile mit sich, dass einerseits die überlappte Portion gegenüber den Aufnahmeplatten beispielsweise mittig zentral ausgerichtet werden kann, andererseits kann die Produktportion auf eine ggf. einstellbar variabel vorgebbare Gesamtbreite zusammengeschoben werden, die in der Steuerung hinterlegt ist und in direktem Zusammenhang mit den Abmaßen des Behälters steht. So kann zum prozesssicheren Ablegen bzw. Einlegen der überlappten Produktportion die Breite um einen gewünschten Wert kleiner als die Breite des Behälters bezogen auf die Vorschubrichtung erzeugt werden.

Vorzugsweise ist eine Robotereinheit mit einer Steuerung vorgesehen, in der ein Maß für die Überlappung hinterlegbar ist, um die Anschläge entsprechend zu bewegen, damit das für den Behälter vorgesehene Maß für die Überlappung vom Greifer selbst vorgenommen werden kann.

Ein erfindungsgemäßes Verfahren zum Betrieb eines Greifers sieht vor, dass mittels der ersten Aufnahmeplatte die erste Produktportion und mittels der zweiten Aufnahmeplatte die zweite Produktportion aufgenommen wird und der Greifer beide Aufnahmeplatten in eine geschlossene Stellung bewegt. Das Bewegen der Aufnahmeplatten in die geschlossene Stellung erfolgt entweder beim oder nach dem Aufnehmen der zweiten Produktportion, d. h. die Aufnahmebewegung könnte auch identisch sein mit der Bewegung des Greifers in seine geschlossene Stellung. Die zweite Produktportion wird mittels des zweiten Anschlags in Richtung der ersten Aufnahmeplatte verschoben, bevor die erste Produktportion mittels des ersten Anschlags über die zweite Produktportion in Richtung der zweiten Aufnahmeplatte geschoben wird, um die zwei Produktportionen bei geschlossenem Greifer überlappen zu lassen. Danach wird die überlappte Gesamtportion bestehend aus beiden Produktportionen in einen Behälter oder auf ein Transportband abgelegt. So kann Produktionszeit eingespart werden, da die Funktion "Überlappen zweier Produktportionen" durch den Greifer selbst und während der Umsetzbewegung vom Zuführband zum Behälter erfolgt. Gleichzeitig können Zuführbänder zum Erzeugen überlappender Produktportionen entfallen. Dies führt zu einem geringeren Platzbedarf, einem kleineren sogenannten Foodprint, für die Verpackungsanlage.

Vorzugsweise befinden sich ein erster und/oder ein zweiter Produktniederhalter nach dem Aufnehmen der jeweiligen Produktportion bis zum Verschieben der jeweiligen Produktportion mittels des oder der Anschläge in einer unteren Halteposition, um die Produktportionen bei hohen Beschleunigungen des Greifers sicher auf den Aufnahmeplatten zu halten.

In einer besonders vorteilhaften Ausführung liegt die erste Produktportion auf der ersten Aufnahmeplatte oberhalb und seitlich versetzt der zweiten Produktportion, die sich auf der zweiten Aufnahmeplatte befindet. So kann das Schieben der ersten Produktportion auf bzw. über die zweite Produktportion auf einfachste Weise erfolgen.

Bevorzugt ist in der Steuerung der Robotereinheit das Maß für die Überlappung hinterlegt und die Steuerung bewegt die Anschläge entsprechend.

Die Erfindung ist nicht auf die Aufnahme von lediglich zwei Produktportionen beschränkt. Die erste Produktportion kann beispielsweise aus mehreren Reihen geschindelter Einzelprodukte wie Wurst-, Fleisch- oder Käsescheiben bestehen.

Im Folgenden wird ein vorteilhaftes Ausführungsbeispiel der Erfindung anhand einer Zeichnung näher dargestellt.
- Figur 1: zeigt einen Picker mit einem erfindungsgemäßen Greifer,
- Figur 2: zeigt eine Ansicht des Greifers in Transportrichtung aufzunehmender Produkte,
- Figur 3: zeigt den Greifer mit jeweils beidseitig aufgenommen Produktportionen in einer offenen Stellung,
- Figur 4: zeigt den Greifer in einer geschlossenen Stellung und
- Figur 5: zeigt den geschlossenen Greifer nach einem Überlappungsvorgang vor dem Ablegen der Gesamtportion.

Gleiche Komponenten sind in den Figuren durchgängig mit gleichen Bezugszeichen versehen.

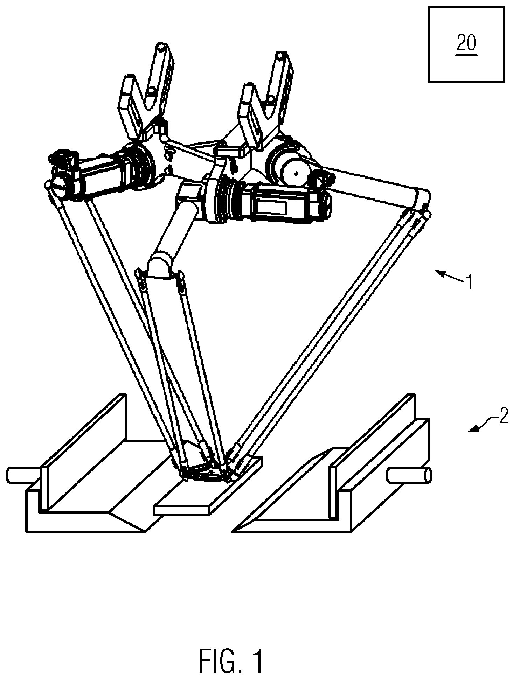

Figur 1 zeigt als Robotereinheit einen Picker 1 in Form eines Delta-Roboters mit einem erfindungsgemäßen Greifer 2. Es ist eine Steuerung 20 für den Picker 1 und den Greifer 2 vorgesehen, in der beispielsweise Einstellungen für den Greifer 2 in Programmen hinterlegbar sind.

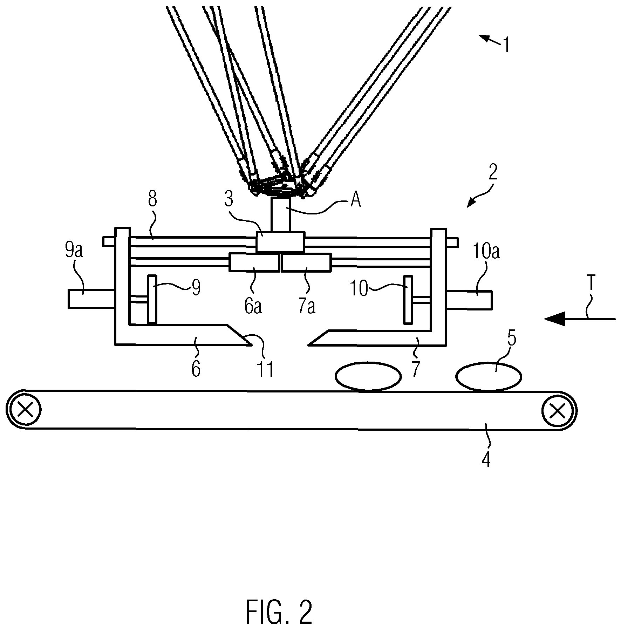

Figur 2 zeigt eine Ansicht des Greifers 2, der drehbar um eine vertikale Drehachse A über ein Verbindungselement 3 am Picker 1 angeordnet ist, wobei ein Zuführband 4 in einer Transportrichtung T Produkte 5 in den Pickbereich des Pickers 1 zuführt. Der Greifer 2 umfasst eine in Fig. 2 links dargestellte erste Aufnahmeplatte 6 und eine gegenüberliegende rechts dargestellte zweite Aufnahmeplatte 7. Beide Aufnahmeplatten 6, 7 sind mittels einer horizontalen Führung 8 und einem jeweiligen Verstellantrieb 6a, 7a separat und relativ zueinander bewegbar, um Produkte 5 aufzunehmen und abzulegen.

Der Greifer 2 weist weiterhin einen ersten bewegbaren Anschlag 9 auf, der der ersten Aufnahmeplatte 6 zugeordnet ist, um Produkte 5 oder Produktportionen relativ zur Aufnahmeplatte 6 zu verschieben. Analog dazu weist der Greifer 2 einen zweiten bewegbaren Anschlag 10 für die zweite Aufnahmeplatte 7 auf. In der gezeigten Ausführung ist jeweils ein vorzugsweise motorischer Verstellantrieb 9a, 10a zum Bewegen der Anschläge 9, 10 an den jeweiligen Aufnahmeplatten 6, 7 vorgesehen. Die Verstellantriebe 9a, 10a könnten auch an einem anderen Teil des Greifers 2 angeordnet sein, um Produkte 5 auf den Aufnahmeplatten 6, 7 zu bewegen oder als Anschlag bei der Produktaufnahme zu fungieren.

Die nicht näher dargestellte und aus dem Stand der Technik bekannte Produktaufnahme erfolgt derart, dass der Greifer 2 mit der Unterseite der Aufnahmeplatten 6, 7 sich so nahe wie möglich dem Zuführband 4 annähert und dann eine Bewegung der Aufnahmeplatte 6, 7 in Richtung Produkt 5 ausführt, um mittels einer schrägen Kante 11 an der Vorderseite der Aufnahmeplatte 6, 7 sich mit dieser unter das Produkt 5 zu schieben, so dass dieses in einer gewünschten Position auf der Aufnahmeplatte 6, 7 zum Liegen kommt.

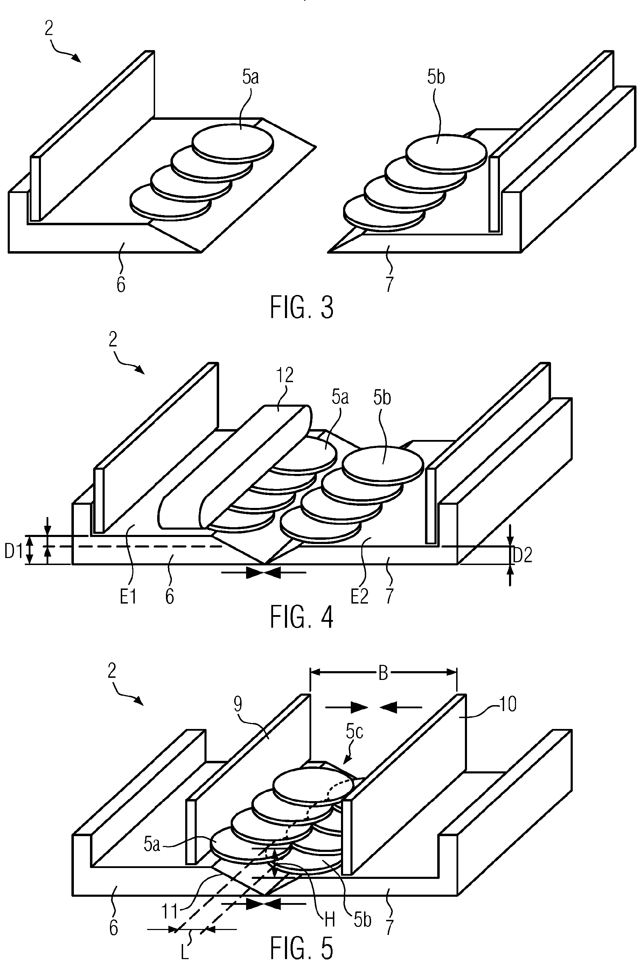

Figur 3 zeigt den Greifer 2 mit jeweils beidseitig aufgenommen Produktportionen 5 in einer offenen Stellung, nachdem die erste Aufnahmeplatte 6 die erste Produktportion 5a und die zweite Aufnahmeplatte 7 die zweite Produktportion 5b aufgenommen hat.

Figur 4 zeigt den Greifer 2 in einer geschlossenen Stellung, bei der die zwei Aufnahmeplatten 6, 7 zueinander bewegt wurden. In dieser Darstellung ist gut zu erkennen, dass die erste Aufnahmeplatte 6 eine erste Aufnahmeebene E1 aufweist, die orthogonal zur Bewegungsrichtung, also in vertikaler Richtung, höher ist als eine zweite Aufnahmeebene E2 der zweiten Aufnahmeplatte 7. In dieser Ausführung weist die erste Aufnahmeplatte 6 eine größere Stärke D1 auf als die zweite Aufnahmeplatte D2. Anstatt einer größeren Stärke D1 der ersten Aufnahmeplatte 6 könnten beide Aufnahmeplatten 6, 7 identisch hinsichtlich ihrer Stärke D1, D2 ausgebildet sein, aber dafür eine der beiden Aufnahmeplatten 6, 7 eine nicht gezeigte vertikale Verstellvorrichtung umfassen.

In Figur 4 ist eine Variante des Greifers 2 gezeigt, die einen Produktniederhalter 12 beispielsweise für die erste Aufnahmeplatte 6 zeigt, der die erste Produktportion 5a auf die erste Aufnahmeebene E1 drückt, um ein Verändern der Position der ersten Produktportion 5a auf der ersten Aufnahmeplatte 6 während einer schnellen Greiferbewegung zu verhindern. Zusätzlich oder alternativ kann ein entsprechender Produktniederhalter 12 auch für die zweite Aufnahmeplatte 7 vorgesehen sein.

Figur 5 zeigt den geschlossenen Greifer 2 nach einem Überlappungsvorgang vor dem Ablegen der Gesamtportion 5c, die aus den Produktportionen 5a und 5b besteht. Der Überlappungsvorgang beginnt mit einem Schließen der zwei Aufnahmeplatten 6, 7 zueinander. Anschließend daran schiebt der zweite Anschlag 10 die zweite Produktportion 5b in Richtung erster Aufnahmeplatte 6 derart, dass die zweite Produktportion 5b an der schrägen Kante 11 zum Liegen kommt. Die Stärke D1 der Aufnahmeplatte 6, auch als Ausbildung in der Höhe bezeichnet, ist vorzugsweise um wenigstens eine Produkthöhe H der zweiten Produktportion 5b größer als die Stärke D2 der zweiten Aufnahmeplatte 7. So ist sichergestellt, dass bei der folgenden Bewegung des ersten Anschlags 9 die erste Produktportion 5a über die zweite Produktportion 5b in Richtung der zweiten Aufnahmeplatte 7 geschoben werden kann. Das Maß L für den Überlapp und die Gesamtbreite B der überlappenden Gesamtportion 5c kann über die Stellung der zwei Anschläge 9, 10 zueinander erzeugt bzw. eingestellt werden. In der Steuerung 20 kann das Maß L für den Überlapp bzw. die Überlappung hinterlegt sein. So können beispielsweise Gesamtportionen mit unterschiedlicher Gesamtbreite B erzeugt werden, auch wenn die gleichen Produktportionen 5a, 5b umgesetzt werden.

Das Erzeugen des Überlapps kann während der Umsetzbewegung des Greifers 2 vom Zuführband 4 zum nicht näher dargestellten Verpackungsbehälter erfolgen, um Prozesszeit einzusparen. Beim Ablegen in einen Verpackungsbehälter wird die Gesamtportion 5c durch Auseinanderbewegen der zwei Aufnahmeplatten 6, 7 freigegeben und kann in den Verpackungsbehälter hineinfallen. Die Anschläge 9, 10 behalten ihre Stellung gegenüber der Gesamtportion 5c bei, um somit sehr exakt die Gesamtportion 5c in ihrer Lage zum Verpackungsbehälter zu positionieren.

## Patentansprüche

1. Greifer (2), umfassend eine erste Aufnahmeplatte (6) zur Aufnahme einer ersten Produktportion (5a) und eine zweite Aufnahmeplatte (7) zur Aufnahme einer zweiten Produktportion (5b), wobei die Aufnahmeplatten (6, 7) relativ zueinander bewegbar sind, sowie einen ersten bewegbaren Anschlag (9), der relativ zur ersten Aufnahmeplatte (6) bewegbar ist, und einen zweite bewegbaren Anschlag (10), der relativ zur zweiten Aufnahmeplatte (7) bewegbar ist, wobei der erste (9) und zweite Anschlag (10) derart relativ zueinander bewegbar sind, um bei geschlossenem Greifer (2) die Produktportionen (5a, 5b) zueinander zu bewegen, damit sich anschließend die Produktportionen (5a, 5b) überlappen, und wobei eine erste Aufnahmeebene (E1) der ersten Aufnahmeplatte (6) orthogonal zur Bewegungsrichtung der Aufnahmeplatten (6, 7) höher ist als eine zweite Aufnahmeebene (E2) der zweiten Aufnahmeplatte (7).

2. Greifer nach Anspruch 1, **dadurch gekennzeichnet, dass** die erste Aufnahmeplatte (6) eine größere Ausbildung in der Höhe (D1) aufweist als die zweite Aufnahmeplatte (7).

3. Greifer nach Anspruch 2, **dadurch gekennzeichnet, dass** die Ausbildung (D1) in der Höhe von der ersten Aufnahmeplatte (6) um wenigstens 5 mm, vorzugsweise 10 mm, größer ist als die Höhe (D2) der zweiten Aufnahmeplatte (7).

4. Greifer nach einem der vorangehenden Ansprüche, **dadurch gekennzeichnet, dass** der Greifer (2) einen ersten Produktniederhalter (12) und/oder einen zweiten Produktniederhalter aufweist.

5. Greifer nach Anspruch 4, **dadurch gekennzeichnet, dass** der Produktniederhalter (12) orthogonal zur Aufnahmeebene (E1, E2) bewegbar ist.

6. Greifer nach einem der vorangehenden Ansprüche, **dadurch gekennzeichnet, dass** der erste Anschlag (9) und der zweite Anschlag (10) jeweils einen Antrieb (9a, 10a) aufweisen.

7. Greifer nach Anspruch 6, **dadurch gekennzeichnet, dass** der jeweilige Antrieb (9a, 10a) ein Servomotor oder ein Schrittmotor oder ein pneumatischer Antrieb ist.

8. Robotereinheit (1) mit einem Greifer nach einem der vorangehenden Ansprüche sowie mit einer Steuerung (20), in der ein Maß L für die Überlappung zweier Produktportionen (5a, 5B) hinterlegbar ist.

9. Verfahren zum Betrieb eines Greifers (2), wobei mittels einer ersten Aufnahmeplatte (6) eine erste Produktportion (5a) und mittels einer zweiten Aufnahmeplatte (7) eine zweite Produktportion (5b) aufgenommen wird, wobei der Greifer (2) beide Aufnahmeplatten (6, 7) in eine geschlossene Stellung bewegt, und wobei die zweite Produktportion (5b) mittels eines zweiten Anschlags (10) in Richtung der ersten Aufnahmeplatte (6) verschoben wird, bevor die erste Produktportion (5a) mittels eines ersten Anschlags (9) über die zweite Produktportion (5b) in Richtung der zweiten Aufnahmeplatte (7) geschoben wird, um die zwei Produktportionen (5a, 5b) bei geschlossenem Greifer (2) überlappen zu lassen, bevor die überlappte Gesamtportion (5c) umfassend beide Produktportionen (5a, 5b) in einen Behälter oder auf ein Transportband abgelegt wird.

10. Verfahren nach Anspruch 9, **dadurch gekennzeichnet, dass** ein erster (12) und/oder ein zweiter Produktniederhalter (12) nach dem Aufnehmen der jeweiligen Produktportion (5a, 5b) bis zum Verschieben der jeweiligen Produktportion (5a, 5b) mittels des oder der Anschläge (9, 10) sich in einer unteren Halteposition befinden.

11. Verfahren nach einem der Ansprüche 9 oder 10, **dadurch gekennzeichnet, dass** die erste Produktportion (5a) auf der ersten Aufnahmeplatte (6) oberhalb und seitlich versetzt der zweiten Produktportion (5b), die sich auf der zweiten Aufnahmeplatte (7) befindet, liegt.

12. Verfahren nach einem der vorherigen Ansprüche 9 bis 11, **dadurch gekennzeichnet, dass** in einer Steuerung (20) einer den Greifer umfassenden Robotereinheit (1) ein Maß (L) für die Überlappung hinterlegt ist und die Steuerung (20) die Anschläge (9, 10) entsprechend bewegt.

## Claims

1. Gripper (2) comprising a first receiving plate (6) for receiving a first product portion (5a) and a second receiving plate (7) for receiving a second product portion (5b), where said receiving plates (6, 7) are movable relative to one another, and a first movable stop (9) which is movable relative to said first receiving plate (6), and a second movable stop (10) which is movable relative to said second receiving plate (7), wherein that said first stop (9) and said second stop (10) are movable relative to one another so as to move said product portions (5a, 5b) toward one another when said gripper (2) is closed such that said product portions (5a, 5b) then overlap one another, and wherein a first receiving plane (E1) of said first receiving plate (6) is higher orthogonally to the direction of motion of said receiving plates (6, 7) than a second receiving plane (E2) of said second receiving plate (7).

2. Gripper according to claim 1, **characterized in that** said first receiving plate (6) has a greater extension in height (D1) than said second receiving plate (7).

3. Gripper according to claim 2, **characterized in that** the extension (D1) in the height of said first receiving plate (6) is greater by at least 5 mm, preferably 10 mm, than height (D2) of said second receiving plate (7).

4. Gripper according to one of the preceding claims, **characterized in that** said gripper (2) has a first product hold-down device (12) and/or a second product hold-down device.

5. Gripper according to claim 4, **characterized in that** said product hold-down device (12) is movable orthogonally relative to said receiving plane (E1, E2).

6. Gripper according to one of the preceding claims, **characterized in that** said first stop (9) and said second stop (10) each comprise a drive (9a, 10a).

7. Gripper according to claim 6, **characterized in that** said respective drive (9a, 10a) is a servo motor or a stepping motor or a pneumatic drive.

8. Robot unit (1) with a gripper according to one of the preceding claims and with a controller (20) in which a dimension L for the overlap of two product portions (5a, 5b) can be stored.

9. Method for operating a gripper (2), wherein a first product portion (5a) is received by way of a first receiving plate (6), and a second product portion (5b) is received by way of a second receiving plate (7), said gripper (2) moves said two receiving plates (6, 7) to a closed position, said second product portion (5b) is pushed by a second stop (10) in the direction of said first receiving plate (6) before said first product (5a) is pushed by a first stop (9) over said second product portion (5b) in the direction of said second receiving plate (7) in order to overlap said two product portions (5a, 5b) when said gripper (2) is closed, before said overlapped overall portion (5c) comprising both product portions (5a, 5b) is deposited in a container or onto a conveyor belt.

10. Method according to claim 9, **characterized in that** a first (12) and/or a second product hold-down device (12) are in a lower holding position after receiving said respective product portion (5a, 5b) until the respective product portion (5a, 5b) is pushed by said stop or stops (9, 10).

11. Method according to one of the claims 9 to 10, **characterized in that** said first product portion (5a) lies on said first receiving plate (6) above and laterally offset from said second product portion (5b) which is located on said second receiving plate (7).

12. Method according to one of the preceding claims 9 to 11, **characterized in that** a dimension (L) for the overlap is stored in a controller (20) of a robot unit (1) comprising said gripper and said controller (20) moves said stops (9, 10) accordingly.

## Revendications

1. Outil de préhension (2), comprenant une première plaque de réception (6) permettant la réception d'une première portion de produit (5a) et une seconde plaque de réception (7) permettant la réception d'une seconde portion de produit (5b), dans lequel les plaques de réception (6, 7) sont mobiles l'une par rapport à l'autre, et une première butée mobile (9) qui est mobile par rapport à la première plaque de réception (6) et une seconde butée mobile (10) qui est mobile par rapport à la seconde plaque de réception (7), dans lequel
la première butée (9) et la seconde butée (10) sont mobiles l'une par rapport à l'autre de manière, lorsque l'outil de préhension (2) est fermé, à pouvoir déplacer les portions de produit (5a, 5b) l'une par rapport à l'autre afin que les portions de produit (5a, 5b) se chevauchent, et dans lequel
un premier plan de réception (E1) de la première plaque de réception (6) est, orthogonalement par rapport à la direction de déplacement des plaques de réception (6, 7), plus haut qu'un second plan de réception (E2) de la seconde plaque de réception (7).

2. Outil de préhension selon la revendication 1, **caractérisé en ce que** la première plaque de réception (6) présente dans la hauteur (D1) une extension supérieure à celle de la seconde plaque de réception (7).

3. Outil de préhension selon la revendication 2, **caractérisé en ce que** l'extension (D1) de la première plaque de réception (6) dans la hauteur est supérieure d'au moins 5 mm, de manière préférée 10 mm, à la hauteur (D2) de la seconde plaque de réception (7).

4. Outil de préhension selon l'une quelconque des revendications précédentes, **caractérisé en ce que** l'outil de préhension (2) présente un premier dispositif de maintien de produit (12) et/ou un second dispositif de maintien de produit.

5. Outil de préhension selon la revendication 4, **caractérisé en ce que** le dispositif de maintien de produit (12) peut être déplacé orthogonalement par rapport au plan de réception (E1, E2).

6. Outil de préhension selon l'une quelconque des revendications précédentes, **caractérisé en ce que** la première butée (9) et la seconde butée (10) présentent respectivement un entraînement (9a, 10a).

7. Outil de préhension selon la revendication 6, **caractérisé en ce que** l'entraînement (9a, 10a) respectif est un servomoteur ou un moteur pas-à-pas ou un entraînement pneumatique.

8. Unité robotique (1) avec un outil de préhension selon l'une quelconque des revendications précédentes et avec un dispositif de commande (20) au sein duquel peut être stockée une dimension (L) correspondant au chevauchement de deux portions de produit (5a, 5b).

9. Procédé de fonctionnement d'un outil de préhension (2), dans lequel une première portion de produit (5a) est accueillie grâce à une première plaque de réception (6) et une seconde portion de produit (5b) est accueillie grâce à une seconde plaque de réception (7), dans lequel l'outil de préhension (2) déplace les deux plaques de réception (6, 7) jusqu'à une position fermée, et dans lequel la seconde portion de produit (5b) est déplacée en direction de la première plaque de réception (6) au moyen d'une seconde butée (10) avant que la première portion de produit (5a) ne soit poussée en direction de la seconde plaque de réception (7) par-dessus la seconde portion de produit (5b) au moyen d'une première butée (9) afin de permettre aux deux portions de produit (5a, 5b) de se chevaucher lorsque l'outil de préhension (2) est fermé, avant que la portion complète (5c) superposée comprenant les deux portions de produit (5a , 5b) ne soit placée dans un récipient ou sur une bande transporteuse.

10. Procédé selon la revendication 9, **caractérisé en ce qu'**un premier dispositif de maintien de produit (12) et/ou un second dispositif de maintien de produit (12) se trouve(nt) dans une position de retenue inférieure après la réception de la portion de produit (5a, 5b) respective et jusqu'au déplacement de la portion de produit (5a, 5b) respective au moyen de la ou des butée(s) (9, 10).

11. Procédé selon la revendication 9 ou 10, **caractérisé en ce que** la première portion de produit (5a) présente sur la première plaque de réception (6) est décalée vers le haut et latéralement par rapport à la seconde portion de produit (5b) qui se trouve sur la seconde plaque de réception (7).

12. Procédé selon l'une quelconque des revendications 9 à 11 précédentes, **caractérisé en ce qu'**une dimension (L) correspondant au chevauchement est stockée dans un dispositif de commande (20) d'une unité robotique (1) comprenant l'outil de préhension, et le dispositif de commande (20) déplace les butées (9, 10) de manière correspondante.
